# EUROPÄISCHE PATENTSCHRIFT

(11) **EP 3 520 927 B1**
(45) Veröffentlichungstag und Bekanntmachung des Hinweises auf die Patenterteilung: **29.07.2020**
(21) Anmeldenummer: 18154428.9
(22) Anmeldetag: 31.01.2018
(51) Int. Cl.: B22F 3/105, B22F 7/06, B22F 7/08, B33Y 10/00, B29C 64/153

(54) **3D-DRUCKER MIT EINEM ELEKTRONISCH ANSTEUERBAREN UMFORMMODUL**
3D PRINTER COMPRISING AN ELECTRONICALLY CONTROLLABLE MOULDING MODULE
IMPRIMANTE TRIDIMENSIONNELLE DOTÉE D'UN MODULE DE FORMAGE À COMMANDE ÉLECTRONIQUE

(43) Veröffentlichungstag der Anmeldung: 07.08.2019
(73) Patentinhaber: United Grinding Group Management AG, 3005 Bern (CH)
(72) Erfinder: Cloots, Michael, 9008 St. Gallen (CH)
(74) Vertreter: Maiwald Patent- und Rechtsanwaltsgesellschaft mbH

(56) Entgegenhaltungen:
- EP-A1- 3 219 412
- WO-A1-2016/025701
- WO-A1-2017/015241
- DE-A1-102016 213 420
- JP-A- 2003 094 185
- US-A1- 2003 052 105
- US-A1- 2016 243 649
- US-B2- 9 636 775
- POHL R ET AL: "Solid-phase laser-induced forward transfer of variable shapes using a liquid-crystal spatial light modulator", APPLIED PHYSICS A MATERIALS SCIENCE & PROCESSING, SPRINGER BERLIN HEIDELBERG, BERLIN/HEIDELBERG, Bd. 120, Nr. 2, 12. Mai 2015 (2015-05-12), Seiten 427-434, XP035516347, ISSN: 0947-8396, DOI: 10.1007/S00339-015-9212-2 [gefunden am 2015-05-12]

## Beschreibung

### Gebiet der Erfindung

Die Erfindung betrifft den 3D-Druck. Insbesondere betrifft die Erfindung einen 3D-Drucker zur Herstellung eines dreidimensionalen Bauteils mittels eines selektiven Laser-Schmelzverfahrens, die Verwendung eines Spatial-Light-Modulators in einem 3D-Drucker zur Umformung eines Laserstrahls zur Herstellung eines dreidimensionalen Bauteils, ein Verfahren zur Herstellung eines dreidimensionalen Bauteils mittels eines selektiven Laser-Schmelzverfahrens oder eines Schweißverfahrens, ein Programmelement und ein computerlesbares Medium.

### Hintergrund

Das selektive Laserschmelzen (Englisch: Selective Laser Melting, Abkürzung SLM) ist ein generatives Fertigungsverfahren, das zur Gruppe der Strahlschmelzverfahren gehört. Beim selektiven Laserschmelzen wird der zu verarbeitende Werkstoff in Pulverform in einer dünnen Schicht auf einer Grundplatte aufgebracht. Der pulverförmige Werkstoff wird mittels Laserstrahlung lokal vollständig umgeschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird so lange wiederholt, bis alle Schichten umgeschmolzen sind. Das fertige Bauteil wird vom überschüssigen Pulver gereinigt und nach Bedarf bearbeitet oder sofort verwendet.

Die für den Aufbau des Bauteils typischen Schichtstärken bewegen sich für alle gängigen Materialien zwischen 20 und 100 µm.

Die durch selektives Laserschmelzen gefertigte Bauteile zeichnen sich durch große spezifische Dichten aus. Dies gewährleistet, dass die mechanischen Eigenschaften des generativ hergestellten Bauteils weitgehend denen des Grundwerkstoffs entsprechen.

DE 10 2016 213420 A1 beschreibt ein Verfahren und eine Vorrichtung zum generativen Herstellen eines Bauteils.

US 2016/U243649 A1 beschreibt ein optisches System zum 3D-Druck und ein entsprechendes Steuerungsverfahren.

WO 2017/015241 A1 beschreibt ein Verfahren zur additiven Fertigung.

US 9,636,775 B2 beschreibt eine zusammengesetzte Strahlerzeugung zum Pulverschmelzen.

POHL R. ET. AL, APPLIED PHYSICS A MATERIALS SCIENCE & PROCESSING, Bd. 120, Nr. 2, 12. Mai 2015, S.427 bis 434, XP035516347 beschreibt die Verwendung eines flüssig Kristall Spatial Light Modulators.

EP 3 219 412 A1 beschreibt eine Formgebungsvorrichtung und Formgebungsverfahren.

US 2003/0052105 A1 beschreibt eine Laser-Sintervorrichtung

JP 2003 094185 A1 beschreibt den in der englischsprachigen Zusammenfassung eine Laserschweißvorrichtung.

### Zusammenfassung der Erfindung

Es ist eine Aufgabe der Erfindung, die Herstellung dreidimensionaler Bauteile zu verbessern.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft ein Fertigungssystem zur Herstellung eines dreidimensionalen Bauteils mittels eines selektiven Laser-Schmelzverfahrens. Das Fertigungssystem wird im Folgenden als 3D-Drucker bezeichnet.

Der 3D-Drucker weist eine oder mehrere Laserquellen auf, die eingerichtet sind zur Erzeugung eines oder mehrerer Laserstrahlen, die den "Druckvorgang" durchführen. Es ist eine Arbeitsebene vorgesehen, die eingerichtet ist zur Aufbringung einer Schicht des zu verarbeitenden Werkstoffs in Pulverform. Die Laserstrahlen werden auf die Arbeitsebene gelenkt, um den zu verarbeitenden Werkstoff in dieser Ebene an den gewünschten Stellen zu erhitzen, so dass das dreidimensionale Bauteil schichtweise hergestellt werden kann.

Im Strahlengang eines jeden Lasers ist ein elektronisch ansteuerbares Umformmodul angeordnet, das eingerichtet ist, dem Laserstrahl eine räumliche Modulation aufzuprägen, so dass sich die Strahlform des auf die Arbeitsebene auftreffenden Laserstrahls einstellen lässt. Das elektronisch ansteuerbare Umformmodul ist ein Spatial-Light-Modulator, also ein räumlicher Modulator für Licht.

Hierbei handelt es sich um ein Bauteil, welches dem Laserlicht eine räumliche, elektronisch einstellbare Modulation aufprägt. Neben der Modulation der Intensität des Laserstrahls kann das Umformmodul auch ausgeführt sein, die Phase (zusätzlich oder alternativ zur Intensität) des Laserstrahls zu modulieren.

Das elektronisch ansteuerbare Umformmodul ist dazu eingerichtet, die Strahlform in Form von drei Laserspots zu erzeugen, wobei zwei der Laserspots einen geringeren Durchmesser aufweisen als der dritte Laserspot und die Mittelpunkte der drei Spots ein Dreieck ausbilden, so dass über die zwei kleineren Spots der Temperaturgradient im zu verarbeitenden Werkstoff gesteuert werden kann, um die Auftrittswahrscheinlichkeit von Heißrissen zu senken.

Im Erstarrungsbereich des Schmelzbads, welches durch den Hauptspot erzeugt wird, können transversale Dehnungen auftreten, die ursächlich sind für longitudinal auftretende Heißrisse. Die beiden kleineren Spots, welche den Hauptspot mit einem zu definierenden Offset begleiten, dienen in erster Linie dazu, Wärme um den Erstarrungsbereich einzukoppeln, um die in Folge der induzierten Wärme einhergehende thermische Ausdehnung des Materials dafür zu nutzen, der transversalen Ausdehnung des Materials im Erstarrungsbereich entgegenzuwirken.

Gemäß einer Ausführungsform der Erfindung weist der Laserstrahl bevor er fokussiert wird eine Leistungsdichte von mehr als 200 W/cm² auf, beispielsweise mehr als 300 W/cm². In der Arbeitsebene (also dort, wo der Strahl fokussiert ist) weist der Strahl eine Strahlintensität von weit mehr als 10E+05 bis 10E+06 W/cm² auf. Bevor der Strahl fokussiert wird, weist er im kollimierten und unfokussierten Zustand - je nach Auslegung der optischen Komponenten - einen Durchmesser von 10 bis 20 mm auf. Bei Verwendung einer Laserleistung von 200 bis 500 W resultieren daraus maximale Leistungsdichten von 200 W/cm² und mehr.

Da der Spatial-Light Modulator beispielsweise in jenem Teil des Strahlengangs zur Anwendung kommt, wo der Strahl den besagten Durchmesser von 10 bis 20 mm aufweist, kann dieses Modul für die laserbasierte 3D-Druckanwendung verwendet werden, da die Zerstörschwelle eines Spatial-Light Modulators in etwa bei 200 W/cm² oder darüber liegt.

Gemäß einer weiteren Ausführungsform der Erfindung ist der 3D-Drucker eingerichtet zum Erzeugen der Strahlform des auf die Arbeitsebene auftreffenden Laserstrahls in Form einer Linie. Oft wird bei dem SLM-Prozess mit einem Laser gearbeitet, bei dessen Anwendung in der Prozessebene (=Arbeitseben) ein nahezu kreisförmiger Laserspot entsteht. Mittels des Spatial-Light Modulators eröffnet sich nun die Möglichkeit, den Laserspot in der Arbeitseben so zu "formen", dass daraus eine linienförmige Verteilung der Intensität entsteht. Das menschliche Auge würde evtl. eine Linie wahrnehmen. Verwendet man nun besonders leistungsstarke Laser, kann man innerhalb der Linie eine Intensität erzeugen, die ausreichend ist, um das Material aufzuschmelzen. Das bedeutet, dass sich der Prozess erheblich effizienter gestalten lässt, da bei Verwendung einer "Linienquelle" gegenüber der Verwendung einer Punktquelle deutlich schneller Fläche/Zeit belichtet werden kann.

Alternativ oder zusätzlich kann er eingerichtet sein, die Strahlform des auf die Arbeitsebene auftreffenden Laserstrahls in Form mehrerer nebeneinander angeordneter Laserspots zu erzeugen.

Ein weiterer Aspekt der Erfindung betrifft die Verwendung eines Spatial-Light-Modulators in einem 3D-Drucker zur Umformung eines Laserstrahls zur Herstellung eines dreidimensionalen Bauteils.

Ein weiterer Aspekt der Erfindung betrifft die Verwendung eines Spatial-Light-Modulators in einem Laserstrahlschweißgerät zur Umformung eines Laserstrahls zur Verschweißung zweier Bauteile miteinander.

Ein weiterer Aspekt der Erfindung betrifft ein Verfahren zur Herstellung eines dreidimensionalen Bauteils mittels eines selektiven Laser-Schmelzverfahrens oder eines Schweißverfahrens, bei dem ein Laserstrahl zum Erhitzen eines zu verarbeitenden Werkstoffs erzeugt wird und dem Laserstrahl eine räumliche Modulation durch ein elektronisch ansteuerbares Umformmodul, das im Strahlengang des Laserstrahls angeordnet ist, aufgeprägt wird. Hierdurch wird erreicht, dass die Strahlform des auf eine Arbeitsebene auftreffenden Laserstrahls elektronisch eingestellt wird. Bei dem elektronisch ansteuerbaren Umformmodul handelt es sich um einen Spatial-Light-Modulator.

Ein weiterer Aspekt der Erfindung betrifft ein Programmelement, das, wenn es auf einem Prozessor eines 3D-Druckers oder einem Laserstrahlschweißgerät ausgeführt wird, den 3D-Drucker oder das Laserstrahlschweißgerät anleitet, die oben und im Folgenden beschriebenen Schritte durchzuführen.

Ein weiterer Aspekt der Erfindung betrifft ein computerlesbares Medium, auf dem das oben beschriebene Programmelement gespeichert ist.

Im Folgenden werden weitere Ausführungsformen der Erfindung näher beschrieben. Die Darstellungen in den Figuren sind schematisch und nicht maßstäblich.

### Kurze Beschreibung der Figuren

Fig. 1 zeigt eine schematische Darstellung eines 3D-Druckers bzw. eines Laserstrahlschweißgeräts gemäß einer Ausführungsform der Erfindung.
Fig. 2A bis 2D zeigen die Strahlformen eines auf die Arbeitsebene auftreffenden Laserstrahls gemäß mehrerer Ausführungsformen der Erfindung.
Fig. 3 zeigt die Strahlform eines auf die Arbeitsebene auftreffenden Laserstrahls gemäß einer weiteren Ausführungsform der Erfindung.
Fig. 4 zeigt ein Flussdiagramm eines Verfahrens gemäß einer Ausführungsform der Erfindung.

### Detaillierte Beschreibung von Ausführungsformen

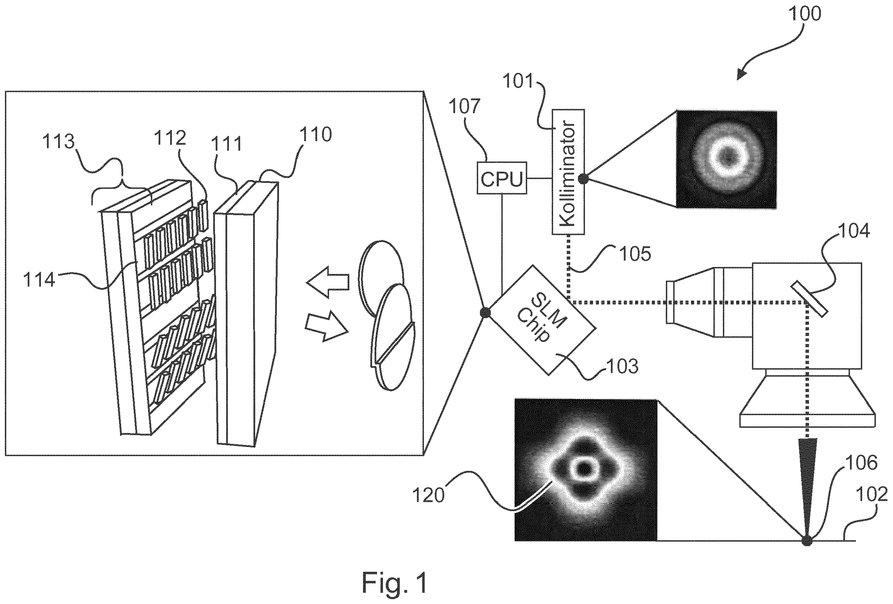

Fig. 1 zeigt schematisch den optischen Strahlengang eines 3D-Druckers 100 bei Verwendung einer F-Theta-Linse (Planfeldlinse) zur Herstellung eines dreidimensionalen Bauteils mittels eines selektiven Laser-Schmelzverfahrens.
Alternativ kann der 3D-Drucker mit einer 3D-Optik ausgestattet sein, mit deren Hilfe sich die Fokuslage variabel einrichten lässt.

Derselbe oder ein ähnlicher Aufbau kann auch für ein Laserstrahlschweißgerät verwendet werden.

Bei dem selektiven Laser-Schmelzverfahren wird in aller Regel mit einem oder mehreren Single-Mode-Lasern 101 gearbeitet werden, welche den Laserstrahl 105 erzeugen. Bei diesem Single-Mode-Laser schwingt nur eine transversale Mode an. Standardmäßig handelt es sich hierbei um die Gauß-Mode (TEMoo). Es können auch SLM-Systeme verwendet werden, die mit extrem leistungsstarken Lasern arbeiten. Hier ist die Verwendung eines Multi-Moden-Lasers nicht unüblich, so dass der Strahl ggf. Abweichungen zum idealen Gaußstrahl (TEMoo) aufweist.

Der kollimierte Laserstrahl 105 trifft auf einen im Strahlengang des Lasers angeordneten Spatial-Light-Modulator -Chip 103. Bei diesem Spatial-Light-Modulator Chip handelt es sich um ein Modul, auf dessen Ebene der Laserstrahl beispielsweise unter einem Winkel von 45° auftrifft.

Im Spatial-Light-Modulator 103 befindet sich beispielsweise eine C-MOS-Schaltung 113 mit einer Pixelelektrode 114. Oberhalb der Pixelelektrode befindet sich eine Flüssigkristallschicht 112, und darüber eine transparente Elektrode 111, die auf einem Glassubstrat 110 aufgebracht ist.

Der Spatial-Light-Modulator 103 wird von dem Prozessor 107 gesteuert, so dass sich verschiedene Strahlformen erzeugen lassen. Ein Beispiel einer solchen Strahlform ist mit Bezugszeichen 120 bezeichnet.

Der umgeformte Laserstrahl wird über eine Optik 104 auf den entsprechenden Arbeitspunkt 106 in der Arbeitsebene 102 gelenkt, um den Werkstoff aufzuschmelzen.

Hohe Abkühlgradienten sind ein Wesensmerkmal des SLM-Prozesses. Als Folge davon können hohe Dehnungen und Dehnraten im Material auftreten, die sich insbesondere bei heißrisssensitiven Materialien nachteilig auf die Qualität des Gefüges auswirken können. Durch den Gauß-Strahl, der vom Laser ausgeht, erfolgt die großflächige Belichtung von Pulverschichten verhältnismäßig langsam, was eine geringe Produktivität des Fertigungsprozesses zur Folge hat.

Zur Umformung des Laserstrahls wird Spatial-Light-Modulation eingesetzt. Das Modul 103 ist hierbei ausgeführt, dass es bei üblichen Leistungsdichten von 200 bis 300 W/cm² oder darüber verwendet werden kann.

Anstelle des Gauß-Strahls wird die Belichtung mittels des durch den Spatial-Light-Modulator 103 umgeformten Laserstrahls durchgeführt. Dadurch lassen sich nahezu beliebige Strahlformen (= Intensitätsverteilungen) realisieren. Je nach Anwendungsfall lassen sich damit im SLM-Prozess erhebliche Vorteile erzielen.

So lassen sich beispielsweise Reduktionen der ansonsten sehr hohen Dehnungen und Dehnraten thermisch durch einen reduzierten Abkühlgradienten verwirklichen. Wird also nun ein Strahlprofil (Strahlform) erzeugt, welches ein Nachheizen des Schmelzbades sowie der wärmebeeinflussten Zone realisiert, können als Folge auch geringere Dehnungen und Dehnraten auftreten, so dass zugleich auch die Auftrittswahrscheinlichkeit von Heißrissen sinkt.

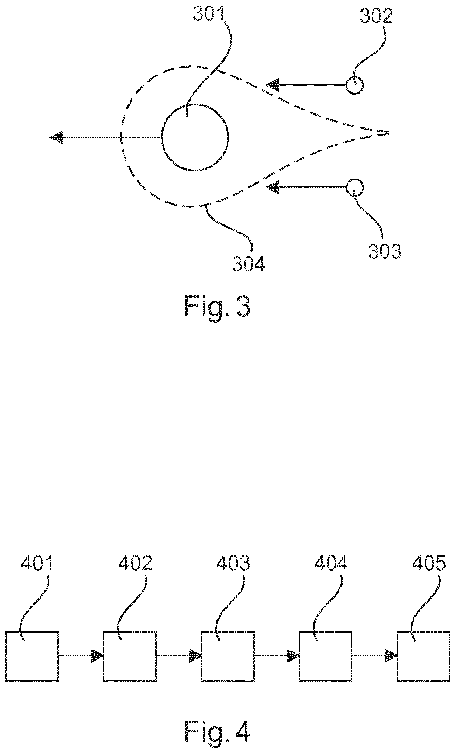

Ein Beispiel für die erfindungsgemäße Strahlform ist in Fig. 3 gezeigt. Der Hauptspot oder Hauptstrahl 301 wird zum Aufschmelzen des zu verarbeitenden Werkstoffs verwendet und die beiden Nebenspots 302, 303, die sich seitlich hinter dem Hauptspot 301 befinden, dienen zur Reduzierung des Abkühlgradienten. Die gestrichelte Linie 304 bezeichnet den Bereich, in welchem der Werkstoff flüssig ist. Die drei Laserspots bewegen sich in Pfeilrichtung nach links und stammen aus derselben Laserquelle.

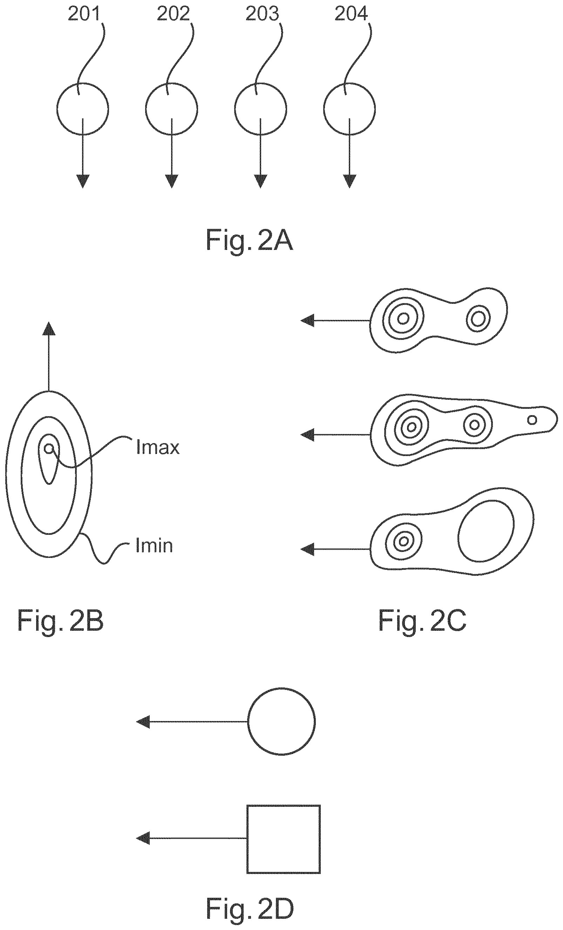

Mittels Spatial-Light-Modulation kann auch ein Strahlprofil erzeugt werden, welches als Linie oder nebeneinander angeordnete Spots 201, 202, 203, 204 wahrgenommen wird (vgl. Fig. 2A). In dieser Ausführungsform bewegen sich die Spots beispielsweise senkrecht zu ihrer Verbindungslinie in Pfeilrichtung nach unten. So lässt sich bei Verwendung einer leistungsstarken Laserquelle ein Linienprofil erzeugen, mit welchem großflächig Pulverschichten belichtet werden können.

Der Einsatz der Spatial-Light-Modulation bietet sehr vielseitige Möglichkeiten der Strahlgestaltung und erlaubt damit die Umsetzung komplexer Strategien, die Temperaturgradienten während des Schichtaufbaus und der Erstarrung des Materials zu beeinflussen. Im Folgenden werden konkret Möglichkeiten der Strahlgestaltung aufgeführt.
1. Die Verwendung eines im Querschnitt ovalen Strahlprofils mit der in Fig. 2B aufgeführten Intensitätsverteilung. Mit Hilfe dieses Strahlprofils ist ein geführtes Abkühlverhalten möglich.
2. Die Verwendung eines Strahls mit mehreren Intensitätsmaxima in der betreffenden Arbeitsebene, wie dies beispielhaft in Fig. 2C gezeigt ist. Diese Art Strahl bzw. Intensitätsverteilung ist ansonsten nur durch eine Komposition von zwei oder mehreren Strahlen möglich.
Dadurch können im Bauteil entstehende Eigenspannungen reduziert werden. Dies ermöglicht die fehlerfreie Fertigung kritischer Bauteilgeometrien und die Verarbeitung anspruchsvoller Materialien.

Zudem besteht auch die Möglichkeit, den SLM-Prozess wesentlich produktiver zu gestalten, da man sehr hohe Laserleistungen als Linienprofil in das Material einkoppeln kann. Im Folgenden werden konkret Möglichkeiten der Strahlgestaltung aufgeführt.
1. Verwendung eines im Querschnitt runden oder rechteckigen Top-Hat bzw. Flat-Top-Profils Fig. 2D. Daraus resultiert ein gleichmäßigerer Eintrag der Laserenergie ins Material und ermöglicht die Einkopplung höher Laserleistungen pro Fläche, woraus sich schlussendlich ein produktiverer Prozess ableiten lässt.
2. Die Verwendung von in Reihe geschalteten Profilen, so dass gleich mehrere nebeneinanderliegende Schmelzbäder erzeugt werden Fig. 2A.

Für bestimmte Materialien können optimale Strahlprofile vorgesehen und im 3D-Drucker bzw. dem Schweißgerät gespeichert sein. Die Wahl des Strahlprofils erfolgt dann unmittelbar durch den 3D-Drucker bzw. das Schweißgerät und bleibt damit unabhängig vom sogenannten Build-Prozessor. Dadurch erspart man sich erhebliche Entwicklungsaufwände beim Build-Prozessor.

Beim Laserstrahlschweißen und SLM hat sich herausgestellt, dass bei niedrigeren Geschwindigkeiten des Laserspots bestimmte Entmischungen im Erstarrungsbereich der Schweißnahtmitte auftreten können. Es entstehen demnach Korngrenzen, die zum Zeitpunkt ihrer Entstehung noch mit einem flüssigen Film benetzt sind und gleichzeitig aufgrund der vorhandenen Abkühlung mit ungünstigen Dehnungen überlagert werden können. Diese Dehnungen zerren an der Korngrenze und führen im ungünstigsten Fall zu einer Öffnung derselben, was dann im Allgemeinen als Heißriss wahrgenommen wird.

Um dieser Heißrissneigung entgegenzuwirken, wird seitlich der Nahtmitte Wärme mittels weiterer Laserspots 302, 303 induziert (vgl. Fig. 3), welche wiederum eine thermische Dehnung hervorruft und einer eventuellen Heißrissentstehung (transversal verlaufende Risse) entgegenwirkt.

Fig. 4 zeigt ein Flussdiagramm eines Verfahrens gemäß einer Ausführungsform der Erfindung. In Schritt 401 wird ein Laserstrahl von einer Laserquelle erzeugt. In Schritt 402 wird dieser Laserstrahl kollimiert und trifft in Schritt 403 auf einen Spatial-Light-Modulator, der dem Laserstrahl eine räumliche Modulation aufprägt, um die Strahlform des Laserstrahls zu verändern. Beispielsweise können aus dem einen Laserstrahl mehrere getrennte Laserstrahlen erzeugt werden. In Schritt 404 trifft der modifizierte Laserstrahl auf die Arbeitsebene. Dort befindet sich im Falle des 3D-Drucks eine Schicht des zu verarbeitenden Werkstoffs oder, im Falle des Laserschweißverfahrens, die herzustellende Schweißnaht. In Schritt 405 wird der Laserstrahl in der Arbeitsebene bewegt, um eine Ebene des Werkstücks zu erzeugen bzw. die Schweißnaht auszubilden.

## Patentansprüche

1. 3D-Drucker (100) zur Herstellung eines dreidimensionalen Bauteils mittels eines selektiven Laser-Schmelzverfahrens, aufweisend:
eine Laserquelle (101), eingerichtet zur Erzeugung eines Laserstrahls (105);
eine Arbeitsebene (102), eingerichtet zur Aufbringung einer Schicht eines zu verarbeitenden Werkstoffs in Pulverform;
ein elektronisch ansteuerbares Umformmodul (103), das im Strahlengang des 3D-Druckers angeordnet ist und eigerichtet ist, dem Laserstrahl eine räumliche Modulation aufzuprägen, so dass sich die Strahlform des auf die Arbeitsebene auftreffenden Laserstrahls einstellen lässt;
wobei es sich bei dem elektronisch ansteuerbaren Umformmodul um einen Spatial Light Modulator handelt;
wobei das elektronisch ansteuerbares Umformmodul (103) eingerichtet ist zum Erzeugen der Strahlform des auf die Arbeitsebene (102) auftreffenden Laserstrahls (105) in Form von drei Laserspots (301, 302, 303), mit einem Hauptspot (301) und zwei Nebenspots (302, 303), die sich seitlich hinter dem Hauptspot befinden, zur Reduzierung eines Temperaturgradienten im zu verarbeitenden Werkstoff und zum Entgegenwirken einer Heißrissbildung.

2. 3D-Drucker (100) nach Anspruch 1,
wobei der Laserstrahl (105) in der Arbeitsebene (102) eine Leistungsdichte von mehr als 200 W/cm² aufweist.

3. 3D-Drucker (100) nach einem der vorhergehenden Ansprüche,
eingerichtet zum Erzeugen der Strahlform des auf die Arbeitsebene (102) auftreffenden Laserstrahls (105) in Form einer Linie.

4. 3D-Drucker (100) nach einem der vorhergehenden Ansprüche,
eingerichtet zum Erzeugen der Strahlform des auf die Arbeitsebene (102) auftreffenden Laserstrahls (105) in Form mehrerer nebeneinander angeordneter Laserspots (201, 202, 203, 204).

5. Verwendung eines Spatial Light Modulators (103) in einem Laserstrahlschweißgerät zur Umformung eines Laserstrahls (105) zur Verschweißung zweier Bauteile miteinander;
wobei der Spatial Light Modulator (103) im Strahlengang des Laserstrahls angeordnet ist und eigerichtet ist, dem Laserstrahl eine räumliche Modulation aufzuprägen, so dass sich die Strahlform des auf die Arbeitsebene auftreffenden Laserstrahls einstellen lässt;
wobei der Spatial Light Modulator (103) eingerichtet ist zum Erzeugen der Strahlform des auf die Arbeitsebene (102) auftreffenden Laserstrahls (105) in Form von drei Laserspots (301, 302, 303), mit einem Hauptspot (301) und zwei Nebensports (302, 303), die sich seitlich hinter dem Hauptsprot befinden, zur Reduzierung eines Temperaturgradienten im zu verarbeitenden Werkstoff und zum Entgegenwirken einer Heißrissbildung.

6. Verfahren zur Herstellung eines dreidimensionalen Bauteils mittels eines selektiven Laser-Schmelzverfahrens oder eines Schweißverfahrens, aufweisend die Schritte:
Erzeugen eines Laserstrahls (105) zum Erhitzen eines zu verarbeitenden Werkstoffs;
Aufprägen einer räumlichen Modulation des Laserstrahls durch ein elektronisch ansteuerbares Umformmodul (103), das im Strahlengang des Laserstrahls angeordnet ist, so dass die Strahlform des auf eine Arbeitsebene (102) auftreffenden Laserstrahls eingestellt wird;
Erzeugen der Strahlform des auf die Arbeitsebene (102) auftreffenden Laserstrahls (105) in Form von drei Laserspots (301, 302, 303), mit einem Hauptspot (301) und zwei Nebensports (302, 303), die sich seitlich hinter dem Hauptspot befinden, zur Reduzierung eines Temperaturgradienten im zu verarbeitenden Werkstoff und zum Entgegenwirken einer Heißrissbildung;
wobei es sich bei dem elektronisch ansteuerbaren Umformmodul um einen Spatial Light Modulator handelt.

7. Programmelement, das, wenn es auf einem Prozessor (107) eines 3D-Druckers ausgeführt wird, den 3D-Drucker anleitet, die folgenden Schritte durchzuführen:
Aufprägen einer räumlichen Modulation eines Laserstrahls durch ein elektronisch ansteuerbares Umformmodul (103), das im Strahlengang des Laserstrahls angeordnet ist, so dass die Strahlform des auf eine Arbeitsebene (102) auftreffenden Laserstrahls eingestellt wird;
Erzeugen der Strahlform des auf die Arbeitsebene (102) auftreffenden Laserstrahls (105) in Form von drei Laserspots (301, 302, 303), mit einem Hauptspot (301) und zwei Nebensports (302, 303), die sich seitlich hinter dem Hauptsprot befinden, zur Reduzierung eines Temperaturgradienten im zu verarbeitenden Werkstoff und zum Entgegenwirken einer Heißrissbildung;
wobei es sich bei dem elektronisch ansteuerbaren Umformmodul um einen Spatial Light Modulator handelt.

8. Computerlesbares Medium, auf dem ein Programmelement nach Anspruch 7 gespeichert ist.

## Claims

1. A 3D printer (100) for producing a three-dimensional component by a selective laser melting process, comprising
a laser source (101) adapted to generate a laser beam (105);
a working plane (102) adapted to apply a layer of a material to be processed in powder form;
an electronically controllable forming module (103) which is located in the beam path of the 3D printer and is designed to apply a spatial modulation to the laser beam so that the beam shape of the laser beam impinging on the working plane can be adjusted;
wherein the electronically controllable forming module is a Spatial Light Modulator;
wherein the electronically controllable forming module (103) is adapted to generate the beam shape of the laser beam (105) impinging on the working plane (102) in the form of three laser spots (301, 302, 303), with one main spot (301) and two secondary spots (302, 303), which are located laterally behind the main spot, for reducing a temperature gradient in the material to be processed and for counteracting hot crack formation.

2. The 3D printer (100) according to claim 1,
wherein the laser beam (105) has a power density of more than 200 W/cm2 in the working plane (102).

3. The 3D printer (100) according to one of the preceding claims,
adapted to generate the beam shape of the laser beam (105) impinging on the working plane (102) in the form of a line.

4. The 3D printer (100) according to one of the preceding claims,
adapted to generate the beam shape of the laser beam (105) impinging on the working plane (102) in the form of a plurality of adjacent laser spots (201, 202, 203, 204).

5. A Use of a Spatial Light Modulator (103) in a laser beam welding apparatus for forming a laser beam (105) to weld two components together;
wherein the Spatial Light Modulator (103) is located in the beam path of the laser beam and is adapted to apply a spatial modulation to the laser beam so that the beam shape of the laser beam impinging on the working plane can be adjusted;
wherein the Spatial Light Modulator (103) is adapted to generate the beam shape of the laser beam (105) impinging on the working plane (102) in the form of three laser spots (301, 302, 303), with a main spot (301) and two side spots (302, 303) located laterally behind the main spot, for reducing a temperature gradient in the material to be processed and for counteracting hot crack formation.

6. A Method for producing a three-dimensional component by means of a selective laser melting process or a welding process, comprising the steps
generating a laser beam (105) for heating a material to be processed;
imposing a spatial modulation of the laser beam by an electronically controllable forming module (103) which is located in the beam path of the laser beam so that the beam shape of the laser beam impinging on a working plane (102) is adjusted;
generating the beam shape of the laser beam (105) impinging on the working plane (102) in the form of three laser spots (301, 302, 303), with a main spot (301) and two side spots (302, 303) located laterally behind the main spot, for reducing a temperature gradient in the material to be processed and for counteracting hot crack formation;
wherein the electronically controllable forming module is a Spatial Light Modulator.

7. A program element that, when executed on a processor (107) of a 3D printer, directs the 3D printer to perform the following steps:
imposing a spatial modulation of a laser beam by an electronically controllable forming module (103) which is located in the beam path of the laser beam so that the beam shape of the laser beam impinging on a working plane (102) is adjusted;
generating the beam shape of the laser beam (105) impinging on the working plane (102) in the form of three laser spots (301, 302, 303), with a main spot (301) and two side spots (302, 303) located laterally behind the main spot, for reducing a temperature gradient in the material to be processed and for counteracting hot crack formation;
wherein the electronically controllable forming module is a Spatial Light Modulator.

8. A computer-readable medium on which a program element according to claim 7 is stored.

## Revendications

1. Imprimante tridimensionnelle (100) destinée à la fabrication d'un composant tridimensionnel au moyen d'un procédé de fusion sélectif par laser, comprenant:
une source laser (101), configurée de manière à produire un faisceau laser (105);
un plan de travail (102), configuré de manière à appliquer une couche d'un matériau à mettre en œuvre sous forme de poudre; et
un module de formage à commande électronique (103), qui est disposé dans le trajet du faisceau de l'imprimante tridimensionnelle et qui est configuré de manière à conférer au faisceau laser une modulation spatiale, de telle manière que la forme de faisceau du faisceau laser qui arrive sur le plan de travail puisse être réglée;
dans laquelle le module de formage à commande électronique est un modulateur spatial de lumière; et
dans laquelle le module de formage à commande électronique (103) est configuré de manière à produire la forme de faisceau du faisceau laser (105) qui arrive sur le plan de travail (102) sous la forme de trois taches laser (301, 302, 303), comprenant une tache principale (301) et deux taches secondaires (302, 303), qui se trouvent latéralement derrière la tache principale, dans le but de réduire un gradient de température dans le matériau à mettre en œuvre et de s'opposer à une fissuration à chaud.

2. Imprimante tridimensionnelle (100) selon la revendication 1, dans laquelle le faisceau laser (105) présente dans le plan de travail (102) une densité de puissance qui est supérieure à 200 W/cm².

3. Imprimante tridimensionnelle (100) selon l'une quelconque des revendications précédentes, configurée de manière à produire la forme de faisceau du faisceau laser (105) qui arrive sur le plan de travail (102) sous la forme d'une ligne.

4. Imprimante tridimensionnelle (100) selon l'une quelconque des revendications précédentes, configurée de manière à produire la forme de faisceau du faisceau laser (105) qui arrive sur le plan de travail (102) sous la forme de plusieurs taches laser (201, 202, 203, 204) disposées les unes à côté des autres.

5. Utilisation d'un modulateur spatial de lumière (103) dans un appareil de soudage par faisceau laser pour le formage d'un faisceau laser (105) en vue du soudage de deux composants l'un à l'autre,
dans laquelle le modulateur spatial de lumière (103) est disposé dans le trajet de faisceau du faisceau laser et est configuré de manière à conférer au faisceau laser une modulation spatiale, de telle manière que la forme de faisceau du faisceau laser qui arrive sur le plan de travail puisse être réglée; et
dans laquelle le modulateur spatial de lumière (103) est configuré de manière à produire la forme de faisceau du faisceau laser (105) qui arrive sur le plan de travail (102) sous la forme de trois taches laser (301, 302, 303), comprenant une tache principale (301) et deux taches secondaires (302, 303), qui se trouvent latéralement derrière la tache principale, dans le but de réduire un gradient de température dans le matériau à mettre en œuvre et de s'opposer à une fissuration à chaud.

6. Procédé de fabrication d'un composant tridimensionnel au moyen d'un procédé de fusion par laser sélectif ou d'un procédé de soudage, comprenant les étapes suivantes:
produire un faisceau laser (105) pour le chauffage d'un matériau à mettre en œuvre;
conférer une modulation spatiale du faisceau laser au moyen d'un module de formage à commande électronique (103), qui est disposé dans le trajet de faisceau du faisceau laser, de telle manière que la forme de faisceau du faisceau laser qui arrive sur un plan de travail (102) puisse être réglée; et
produire la forme de faisceau du faisceau laser (105) qui arrive sur le plan de travail (102) sous la forme de trois taches laser (301, 302, 303), comprenant une tache principale (301) et deux taches secondaires (302, 303), qui se trouvent latéralement derrière la tache principale (301), dans le but de réduire un gradient de température dans le matériau à mettre en œuvre et de s'opposer à une fissuration à chaud;
dans lequel le module de formage à commande électronique est un modulateur spatial de lumière.

7. Elément de programme qui, lorsqu'il est exécuté sur un processeur (107) d'une imprimante tridimensionnelle, ordonne à l'imprimante tridimensionnelle d'effectuer les opérations suivantes:
conférer une modulation spatiale du faisceau laser au moyen d'un module de formage à commande électronique (103), qui est disposé dans le trajet de faisceau du faisceau laser, de telle manière que la forme de faisceau du faisceau laser qui arrive sur un plan de travail (102) soit réglée; et
produire la forme de faisceau du faisceau laser (105) qui arrive sur le plan de travail (102) sous la forme de trois taches laser (301, 302, 303), comprenant une tache principale (301) et deux taches secondaires (302, 303), qui se trouvent latéralement derrière la tache principale, dans le but de réduire un gradient de température dans le matériau à mettre en œuvre et de s'opposer à une fissuration à chaud;
dans lequel le module de formage à commande électronique est un modulateur spatial de lumière.

8. Support lisible par ordinateur, sur lequel un élément de programme selon la revendication 7 est mémorisé.
